(19)

(11) **EP 2 317 835 B1**

(12) # EUROPÄISCHE PATENTSCHRIFT

(45) Veröffentlichungstag und Bekanntmachung des Hinweises auf die Patenterteilung:
**28.02.2018 Patentblatt 2018/09**

(21) Anmeldenummer: **09775763.7**

(22) Anmeldetag: **19.08.2009**

(51) Int Cl.:
***A01G 25/16*** (2006.01) ***A01G 27/00*** (2006.01)

(86) Internationale Anmeldenummer:
**PCT/CH2009/000274**

(87) Internationale Veröffentlichungsnummer:
**WO 2010/025573 (11.03.2010 Gazette 2010/10)**

(54) **VERFAHREN UND VORRICHTUNG ZUR AUTOMATISCHEN REGELUNG DER BEWÄSSERUNG VON PFLANZEN**

METHOD AND DEVICE FOR THE AUTOMATIC REGULATION OF PLANT IRRIGATION

PROCÉDÉ ET DISPOSITIF POUR LA RÉGULATION AUTOMATIQUE DE L'ARROSAGE DE PLANTES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **05.09.2008 CH 14252008**

(43) Veröffentlichungstag der Anmeldung:
**11.05.2011 Patentblatt 2011/19**

(73) Patentinhaber: **PlantCare AG**
**8332 Russikon (CH)**

(72) Erfinder:
- **SCHMIDT, Walter**
  **8332 Russikon (CH)**
- **TOPRAK, Yücel**
  **8046 Zürich (CH)**

(74) Vertreter: **Frei Patent Attorneys**
**Frei Patentanwaltsbüro AG**
**Postfach 1771**
**8032 Zürich (CH)**

(56) Entgegenhaltungen:
**WO-A-2006/081693**
**FR-A- 2 735 328**
**GB-A- 2 281 419**
**US-B1- 6 314 340**
**US-B2- 7 349 764**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die Erfindung betrifft eine Vorrichtung und ein Verfahren zum automatischen Regeln und Steuern einer Bewässerung von Pflanzen gemäss dem Oberbegriff der unabhängigen Patentansprüche. Sie betrifft insbesondere eine Vorrichtung und ein Verfahren für eine optimierte Bewässerungsdauer, ohne Wasserüberschuss und ohne ein Austrocknen des Bodens.

Bei der Bewässerung von Pflanzen, insbesondere bei Rasen- oder Kulturflächen werden Bewässerungsanlagen eingesetzt, die von einer Zeitschaltuhr (Timer) gesteuert werden. An dieser kann der Benutzer sowohl den Zeitpunkt als auch die Dauer der Bewässerung einstellen, wobei auf dem Markt verschiedene Timer zur Steuerung mehrerer Bewässerungszonen und mit unterschiedlichen Komplexitätsgraden erhältlich sind.

Diese Art der Bewässerungssteuerung ist sehr starr, d.h. es wird unabhängig vom effektiven Bedarf der zu bewässernden Pflanzen zum voreingestellten Zeitpunkt die vereingestellte Zeitdauer bewässert.

Das Dokument US 7 349 764 offenbart eine Giesswarneinrichtung, insbesondere für Zimmerpflanzen, zur Ermittlung von Giessintervallen für mindestens eine überwachte Pflanze, mit mindestens einem Feuchtegehaltsensor, einem Zeitgeber und einer Auswerteeinheit. Diese Giesswarneinrichtung, wie auch das entsprechende Verfahren, dient der Ermittlung von Giesszeitpunkten und soll die Notwendigkeit eines Giessvorgangs in Abhängigkeit von der jeweils überwachten Pflanze einfach und möglichst genau vorhersagen. Zum Beispiel kann ein optischer und/oder akustischer Alarmgeber mit der Auswerteeinheit verbunden sein, zur Auslösung eines Alarms nach Ablauf eines Giessintervalls, damit ein Giessvorgang rechtzeitig initiiert wird. Die Auswerteeinheit kann auch dazu dienen, eine Wasserpumpe für einen automatischen Giessvorgang zu aktivieren. Bewässerungsdauern oder -mengen werden in der genannten Schrift US 7 349 764 nicht thematisiert.

Bekannt sind auch sogenannte Regensensoren, die bei Regen die Regenmenge messen und bei Überschreiten einer definierten Menge, den Timer blockieren, sodass bei Regen nicht bewässert wird.

Diese Methode vermeidet zwar eine Bewässerung während oder nach einem Regen. Beispielsweise bei kühler und regenlosen Witterung wird aber auch dann bewässert, wenn noch genügend Feuchte im Boden vorhanden ist und somit nicht bewässert werden müsste.

In den letzten Jahren wurden Bodenfeuchtesensoren an Zeitschaltuhren angeschlossen. Diese Sensoren messen die aktuelle Feuchte im Boden und erst bei Unterschreitung einer einstellbaren, kritischen Bodenfeuchte, geben sie den Timer und damit eine Wassergabe frei. Die meisten dieser Bodenfeuchtesensoren sind in der Anschaffung teuer, wartungsintensiv und das Messergebnis ist stark von anderen Parametern, wie z.B. dem Düngergehalt, abhängig. Sie haben sich daher am Markt nicht breit etablieren können. Es wurde jedoch auch ein neuartiger Bodenfeuchtesensor gemäss WO 2006/081693 entwickelt, welcher diese Nachteile nicht aufweist.

Durch den Einsatz eines solch verbesserten Bodenfeuchtesensors kann man nun verhindern, dass unnötigerweise bewässert wird. Die pro Giesszyklus verabreichte Wassermenge wird jedoch weiterhin vom Benutzer an der Zeitschaltuhr eingestellt und ist somit fix vorgegeben. Die effektiv erforderliche Wassermenge kann aber stark von der eingestellten Menge abweichen und sie variiert auch mit kurz- und langfristigen Klimaschwankungen. Die Erfahrung zeigt, dass insbesondere bei Kulturpflanzen, eine einmal eingestellte Giesszeit von Benutzern nur in Ausnahmefällen den aktuellen Klimabedingungen angepasst und meist das ganze Jahr hindurch nicht verändert wird.

Betrachtet man die immer aktueller werdende Problematik des steigenden Wasserverbrauches, insbesondere auch in Ländern mit knappen Wasserreserven, dann wird der Gesichtspunkt des sorgfältigen Umganges mit der Ressource Wasser sehr wichtig. Dazu gehört auch die Vermeidung unnötigen Wasserverbrauchs. Durch das Bewässern von Kultur- und Grünflächen werden weltweit immense Mengen an Wasser (80% des gesamten Wasserverbrauches) eingesetzt. Man schätzt, dass davon die Hälfte durch intelligente Bewässerung eingespart werden könnte.

Es ist deshalb Aufgabe der Erfindung, ein intelligentes Verfahren zur Steuerung und Regelung einer Bewässerungsdauer zu schaffen, mit welchem mit einer automatisch eingestellten Giessdauer kein Überschuss an Wasser gegossen und andererseits ein Austrocknen des Bodens verhindert wird.

Die Aufgabe wird durch das erfindungsgemässe Verfahren gelöst, wie es in den Patentansprüchen beschrieben ist. Die Erfindung beinhaltet auch eine Vorrichtung, mit welcher das Verfahren durchgeführt werden kann, sowie eine elektronische Regelung, welche in eine entsprechende Vorrichtung eingebaut werden kann und insbesondere in einem Bodenfeuchtesensor verwendet wird.

Das Verfahren betrifft eine intelligente Methode der Bewässerungssteuerung, die einerseits automatisch eine Bewässerungsdauer so festzulegen imstande ist, dass kein Überschuss an Wasser gegossen wird. Andererseits wird auch ein Austrocknen des Bodens verhindert. Das Verfahren ist auch in der Lage, kurz-, mittel-, und langfristige Temperaturänderungen, wie sie im Jahresverlauf vorkommen, automatisch auszugleichen, vorzugsweise derart, dass auch ohne manuellen Eingriff immer eine optimale Wassermenge gegossen wird. Bei der Bewässerung von Kulturpflanzen benötigen diese zudem mit zunehmender Grösse bzw. Blattfläche immer mehr Wasser. Das erfindungsgemässe Verfahren berücksichtigt anwendungsspezifische Bedingungen wie System- und Umgebungsparameter und ist auch in der Lage eine genannte Bedarfserhöhung, automatisch auszugleichen.

Das Verfahren beruht auf einer neuartigen Auswertung, des durch einen Bodenfeuchtesensor gemessenen zeitlichen Verlaufs der Bodenfeuchte. Im besonderen kann dazu der in WO 2006/081693 beschriebenen Bodenfeuchtesensor verwendet werden. Es ist jedoch auch möglich einen beliebigen Bodenfeuchtensensor zu verwenden, welcher eine elektronische Messung von Feuchtewerten erlaubt. Ein Sensor wird dann mit der erfindungsgemässen elektronischen Regelung bzw. einer entsprechenden Auswerteelektronik, z.B. in der Form eines Chips, kombiniert.

Im Verfahren zum Regeln und Steuern einer automatischen Bewässerungseinrichtung wird mit Hilfe eines Bodenfeuchtesensors und einer entsprechenden Auswertelektronik wiederholt die Bodenfeuchte gemessen. Der zeitliche Verlauf der Bodenfeuchte wird dabei vor und nach einem Bewässerungsvorgang analysiert und aus einem Feuchtewert vor einer Bewässerung und einem Feuchtewert nach einer Bewässerung eine Bewässerungsdauer berechnet. Bei der Berechnung der Bewässerungsdauer wird eine systembedingte Kennzahl K berücksichtigt, wobei diese bevorzugt in einer anfänglichen Kalibriermessung bestimmt und in nachfolgenden Messschritten überprüft und angepasst wird.

Die Regelung der erfindungsgemässen Vorrichtung ist vorzugsweise so ausgelegt, dass selbst bei veränderlichen Umweltbedingungen und Pflanzengrösse, einerseits die Pflanze immer ausreichend mit Feuchtigkeit versorgt wird, andererseits aber nicht zuviel Wasser ungenutzt im Boden versickert.

Eine verwendete Feuchteskala weist dabei zwei einstellbare Grenzwerte auf: In Richtung "trocken" wird der Grenzwert, der eine minimale Feuchte festlegt und der Grenzwert, der eine maximale Feuchte festlegt, durch eine Eingabe des Benutzers definiert. In Richtung höherer Feuchte ist ein weiterer Grenzwert "nass" dann erreicht, wenn der Boden mit Wasser gesättigt ist. Dieser Grenzwert ist für einen verwendeten Sensor vorab, also systembedingt, definiert, denn nasser als nass kann ein Sensor nicht werden. Ziel der Steuerung ist es nun einerseits den Grenzwert für "trocken" nicht zu sehr und auch über längere Zeit zu unterschreiten, damit die Pflanzen keine Trockenschäden erleiden oder Trockenstress ausgesetzt sind. Andererseits ist es aber auch wichtig, dass der Grenzwert für "feucht", welcher maximal demjenigen von 'nass' entspricht, nur kurzzeitig erreicht wird, denn zusätzliches Wasser würde versickern und wäre für eine Pflanze nicht nutzbar.

Um die lokalen Verhältnisse bezüglich Bodenbeschaffenheit und auch einen Wassereintrag pro Flächeneinheit von Anfang an in einer Regelung zu berücksichtigen, wird zu Beginn des Verfahrens, in der Regel ist dies zu Beginn einer Bewässerungsperiode, vorzugsweise eine Kalibriermessung durchgeführt. Dabei wird ein Bodenfeuchtesensor in einen zu bewässernden Boden eingebracht. Vorzugsweise wird er in einer bestimmten Tiefe eingesteckt. Diese Tiefe ist von der Lage der Wurzeln abhängig und liegt in einem bevorzugten Bereich von 5 - 30 cm. Dann wird kurzzeitig, vorzugsweise durch einen vorhandenen Sprinkler oder eine Tropfenbewässerung, bewässert. Abhängig von der Bodendurchlässigkeit, wird sich diese Bewässerung früher oder später durch eine Erhöhung des Feuchtegehaltes am Sensor nachweisen lassen. Die Zeit die bis zum Nachweis verstreicht, ist einerseits ein Mass für die Durchlässigkeit des Bodens, andererseits aber auch für den Wassereintrag am Ort des Sensors.

Das Verhältnis der Differenz von Feuchtewert vor dem Bewässern und Feuchtewert nach dem Bewässern zu der Dauer der Bewässerung, kann als eine benutzerspezifische Kennzahl K angesehen werden. K berücksichtigt sowohl die lokale Bodenbeschaffenheit als auch die installierte Bewässerungsleistung. Die Kennzahl K sagt aus, um wie viel sich ein Feuchtewert verändert, wenn über eine bestimmte Zeit, z.B. eine Minute lang, und mit einer bestimmten Wassermenge gegossen wird. Dieser Faktor K wird beim anfänglich durchgeführten Kalibrierschritt, was im wesentlichen einer ersten Messung entspricht, automatisch bestimmt und für die weiteren Messungen verwendet. Es wäre auch möglich, einen anfänglichen Wert von K, beispielsweise gemäss Erfahrungswerten, vorab einzugeben. Eine nachfolgende Regelung passt die Kennzahl entsprechend an die vorgegebenen Feuchtegrenzwerte an.

In einer bevorzugten Ausführungsform des Verfahrens wird die Kennzahl K immer wieder, vorzugsweise zyklisch überprüft, wobei auch eine Bewässerung zyklisch erfolgen kann. K wird dabei vorzugsweise nach einer Messung, welche nach einer Bewässerung erfolgt, mit einem oberen Grenzwert, welcher einem feuchten Boden entspricht, verglichen. Je nach Soll-Istwert Abweichung wird K um einen Faktor vergrössert oder verkleinert. Da K in den vorliegenden Berechnungen umgekehrt proportional zur Bewässerungsdauer ist, ist eine Verkleinerung von K dann angebracht, wenn die Bewässerungsdauer verlängert werden soll, wenn also beispielsweise ein gemessener Feuchtewert einen oberen Feuchtegrenzwert nach einer Bewässerung nicht erreicht hat. Eine Vergrösserung der Kennzahl K, welche somit zu einer verkürzten berechneten Bewässerungsdauer führt, ist dann angebracht, wenn ein oberer Grenzwert "feucht" nach der Bewässerung erreicht wird, aber verhindert werden soll, dass dieser Grenzwert zu stark überschritten wird. Als oberer Grenzwert wird vorzugsweise ein Feuchtewert unterhalb eines Feuchtegrenzwertes für einen vollständig nassen Boden gewählt. Dadurch kann auch ein Überschreiten des Grenzwertes festgestellt werden.

In der Praxis entspricht ein oberer Grenzwert, der einen wassergesättigten Zustand definiert, jener Bodenfeuchte, bei der der Boden soweit mit Wasser gesättigt ist, dass kein Wasser mehr auf Grund der Schwerkraft in den Untergrund absickern kann. Diese Eigenschaft des Bodens wird als Feldkapazität bezeichnet ($GW_{FK}$). Sandige Böden haben eine niedrige, Böden mit einem hohen Anteil an organischen Materialien, wie Torf oder Humus, eine hohe Feldkapazität. Ein solcher Feuchtegrenzwert aufgrund der Feldkapazität kann deshalb unterhalb eines Grenzwertes für einen 'nassen' Boden liegen.

Der oben beschriebene Kalibrierungs- bzw. Einmessvorgang kann auch dazu verwendet werden, eine solche Feldkapazität automatisch zu bestimmen. Dazu wird nach einer Bestimmung der Kennzahl K über längere Zeit, beispielsweise 1 - 2 Stunden, weiter bewässert. Es soll sichergestellt sein, dass der Boden übersättigt ist. Nach einer längeren Wartezeit, beispielsweise von 2 - 12 Stunden, kann angenommen werden, dass das überschüssige Wasser in den Untergrund abgelaufen ist. Dann wird erneut der Feuchtewert bestimmt. Dieser entspricht der Feldkapazität $GW_{FK}$ und kann im System abgespeichert werden. Bei einer manuellen Eingabe eines oberen Grenzwertes ‚feucht', der den $GW_{FK}$ übersteigt, kann nun der Benutzer auf diesen Umstand durch beispielsweise eine Alarmmeldung aufmerksam gemacht werden. Es wäre auch möglich, dass der obere Grenzwert 'feucht' automatisch auf den Feuchtewert entsprechend der Feldkapazität gesetzt wird.

In einer weiteren Ausführungsform des Verfahrens wird eine mit einer Kennzahl K automatisch berechnete Bewässerungsdauer direkt um einen Faktor D, also um eine bei einer vorgegebenen Bewässerungseinrichtung gegebene Wassermenge, erhöht oder erniedrigt. Eine solch fixe Wasserzugabe bzw. -wegnahme von einer durch konkrete Messungen bestimmten, kann dann von Vorteil sein, wenn beispielsweise eine Kulturfläche über eine etwas längere Zeit nass oder feucht bzw. weniger feucht gehalten werden soll. Bei einer berechneten Bewässerungsdauer wird eine Wassermenge auf ein optimales Verhältnis zwischen Wassersparen und Austrocknung hin optimiert. Es ist jedoch mit einem gewöhnlichen Feuchtesensor nicht möglich, zwischen nass, etwas zu nass oder viel zu nass zu unterscheiden. Eine höhere Wasserzugabe durch eine Änderung der Kennzahl K kann sich einer genauen Kontrolle entziehen. Soll nun eine Fläche über eine etwas längere Zeit definiert feucht oder nass bzw. weniger feucht gehalten werden, so kann dies mit der Zugabe einer bzw. Verminderung um eine definierte Menge Wasser erreicht werden. Mit gewissen Einschränkungen kann dies auch durch ein Herab- oder Heruntersetzen der Feuchtegrenzwerte erreicht werden.

Eine bewusste Überschreitung einer maximalen Wassermenge, d.h. eine Überschreitung der gemäss einer Feldkapazität $GW_{FK}$ sinnvollen Wassermenge, kann beispielsweise auch dann angebracht, wenn z.B. eine Versalzung des Bodens verhindert werden soll. Durch eine Übermenge an Wasser wird sicher gestellt, dass sich das Salz im kritischen Wurzelbereich nicht kumulieren kann.

Unterschiedliche Stadien und Aspekte des Verfahrens, sowie bevorzugte Ausführungsformen des Verfahrens, werden im weiteren anhand von beispielhaften Figuren näher erläutert.

Fig. 1 Kalibriermessung und Bestimmung der Feldkapazität;

Fig 2. Verlauf der Bodenfeuchte;

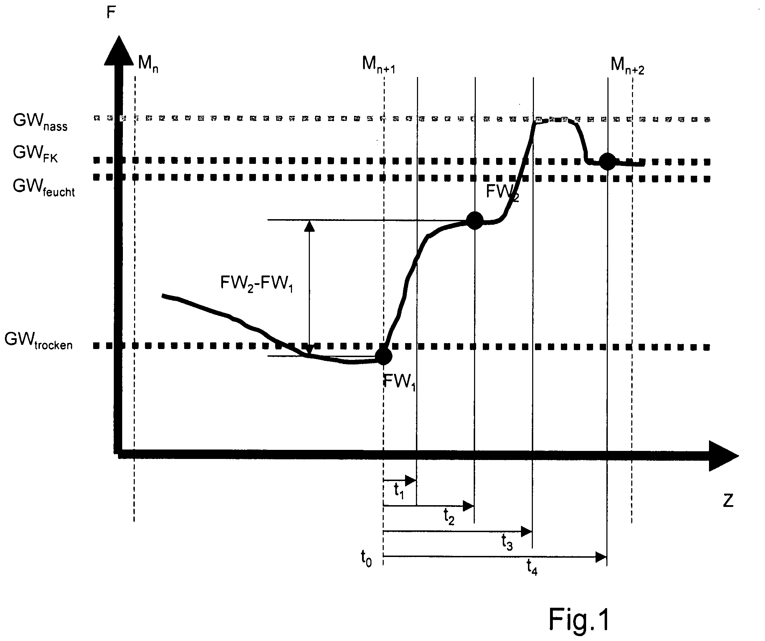

Die Grafik in **Figur 1** zeigt den Verlauf des Feuchtegrads F gegenüber der Zeit Z. In regelmässigen Abständen Mn, Mn+1, Mn+2..... wird die Bodenfeuchtigkeit gemessen. Zum Zeitpunkt Mn liegt die Bodenfeuchtigkeit noch über einem eingestellten Grenzwert GWtrocken, welcher einer minimal zu ereichenden Feuchte eines Bodens entspricht. Zum Zeitpunkt der nachfolgenden Messung Mn+1 zum Zeitpunkt t0 liegt die Bodenfeuchtigkeit, der erste Feuchtewert $FW_1$, unter dem eingestellten Grenzwert GWtrocken. Entsprechend wird ein Bewässerungsvorgang ausgelöst, der zum Zeitpunkt t1 beendet wird. Der Zeitpunkt t1 bzw. die Bewässerungsdauer t1-t0 wird für eine Kalibrierungsmessung vorzugsweise sehr kurz gewählt, z.B. 5 min, um eine Überbewässerung sicher zu verhindern. Zu einem zweiten Zeitpunkt t2 wird eine Kontrollmessung, beispielsweise ca. ½ Stunde nach der Bewässerung, durchgeführt und ein weiterer Feuchtewert $FW_2$ gemessen. Danach bestimmt das System aus den gemessenen Werten eine Kennzahl K gemäss der angegebenen Formel:

$$K = \frac{FW_2 - FW_1}{t_1 - t_0}$$

Die Kennzahl K wird im System abgespeichert.

Der Messvorgang kann auch in zwei oder mehreren Stufen durchgeführt werden, wobei t1-t0 dann der Gesamtzeit entspricht, über die bewässert wurde. Das Ergebnis der Kalibriermessung wird zur Bestimmung der Bewässerungszeit für die folgenden Messungen herangezogen.

Nach der Messung zum Zeitpunkt $t_2$ wird die Bewässerung fortgesetzt, vorzugsweise über eine längerer Zeit, z.B. 1-2 Stunden, bis zum Zeitpunkt t3. Danach wird eine Wartezeit von vorzugsweise mehreren Stunden eingefügt. Zum Zeitpunkt t4 wird neuerlich eine Messung durchgeführt. Der Messwert $GW_{FK}$ entspricht der Feldkapazität. Diese kann bei sehr humusreichen Böden gleich gross sein wie GWnass. Die Bestimmung von $GW_{FK}$ kann auch unabhängig von der Kalibrierungsmessung vorgenommen oder weggelassen werden.

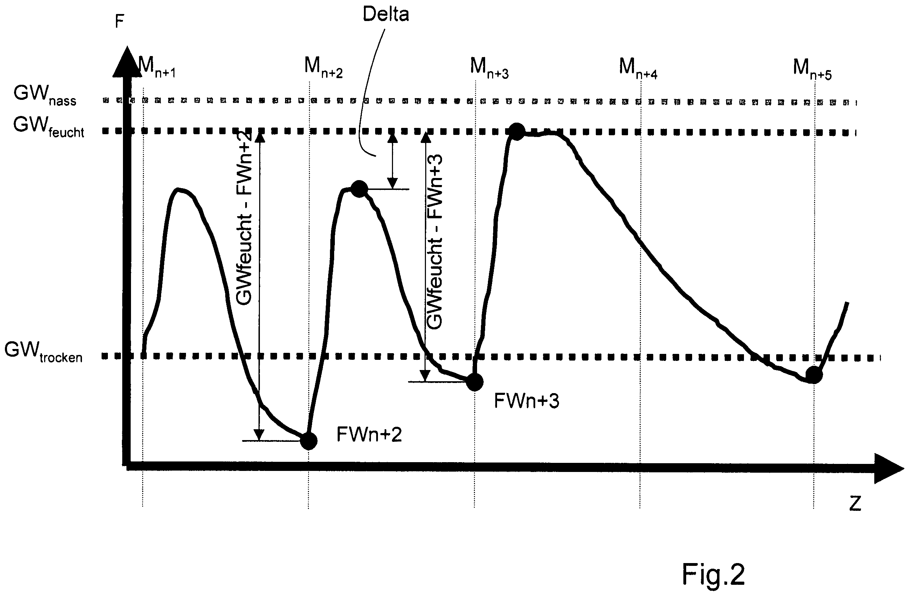

**Figur 2** zeigt einen typischen Verlauf der Bodenfeuchte und das Prinzip einer kontinuierlichen Nachregelung der Bewässerungsdauer in Kombination mit einer vorangegangenen Kalibriermessung.

Nach der Kalibrierungsmessung vorzugsweise gemäss Figur 1, wird zum Zeitpunkt Mn+2 die erste reguläre Messung durchgeführt. Da im gezeigten Beispiel der aktuelle Feuchtewert FWn+2 unter GWtrocken liegt, wird eine Bewässerung ausgelöst. Die Bewässerungsdauer BDn+2 wird nun mit dem gemessenen Feuchtewert FWn+2 und der gemäss der Kalibrierungsmessung bestimmten Kennzahl K wie folgt berechnet:

$$BDn+2 = \frac{GWfeucht - FWn+2}{K}$$

Nach der Bewässerung wird der Feuchtewert wiederum durch eine Kontrollmessung bestimmt. Im gezeigten Beispiel wird der anvisierte Zielwert GWfeucht noch nicht erreicht (Delta >0), d.h. die Bewässerungsdauer war noch zu kurz, bzw. der bei der Kalibrierungsmessung bestimmte Faktor K zu gross.

Das System errechnet nun die Bewässerungsdauer BD für die nachfolgende Bewässerung Mn+3 wie folgt: Die Differenz zwischen dem Zielwert GWfeucht und der aktuellen Feuchte (GWfeucht - FWn+2) vor der Messung Mn+2 wird durch eine um x reduzierte Kennzahl K dividiert. Damit erhält man eine längere Dauer für die nachfolgende Bewässerung zum Zeitpunkt Mn+3. Die entsprechende Formel lautet wie folgt:

$$BDn+3 = \frac{GWfeucht - FWn+3}{K - x}$$

Im gezeigten Beispiel wird nun angenommen, dass durch die erfolgte Korrektur der Zielwert GWfeucht erreicht wird, was durch eine nachfolgende Kontrollmessung bestätigt wird.

Damit wäre das Ziel erreicht und man kann wie vorher gezeigt weiter regeln oder bei sich nicht ändernden Bedingungen gleich Bewässern.

Wurde als oberer Feuchtegrenzwert GWnass gewählt, so besteht das Problem, dass man nicht weiss, ob nicht zu viel Wasser gegeben wurde, da der Sensor ein "Zuviel" nicht anzeigen kann. Daher kann vorsichtshalber angenommen werden, dass zuviel gegossen wurde, ohne jedoch, dass man dies erkennen kann.

Dieses Problem wird vorzugsweise so gelöst, indem immer dann, wenn GWnass erreicht wird, automatisch eine kleine negative Abweichung bestimmter Grösse angenommen wird und diese in die Berechnung der Dauer für die nachfolgende Bewässerung eingerechnet wird. Die Kennzahl K wird dabei um einen Faktor y vergrössert.

Die entsprechende Formel lautet dann wie folgt:

$$BDn+5 = \frac{GWnass - FWn+3}{K + y}$$

Eine Verringerung der Bewässerungsdauer über eine Vergrösserung von K kann auch bei einem gewählten Feuchtegrenzwert GWfeucht erwünscht sein, z.B. wenn eine Wassergabe bewusst tief gehalten werden soll, beispielsweise um möglichst viel Wasser zu sparen oder um Pflanzen möglichst nicht zu feucht zu halten. Anstelle der zu substrahierenden und addierenden Faktoren x, y kann auch ein Multiplikationsfaktor gewählt werden. Dieser wäre dann entsprechend kleiner oder grösser 1.

Nachdem im Beispiel in Figur 2 zum Zeitpunkt Mn+4 die Feuchte noch hoch ist, also über GWtrocken liegt, wird keine Bewässerung ausgelöst. Im Zeitpunkt Mn+5 ist jedoch der untere Grenzwert GWtrocken unterschritten und es wird eine Bewässerung mit der errechneten Dauer BDn+5 gestartet.

Sollte es zwischen den Messpunkten Mn und Mn+i regnen, so ist dies ohne Belang, da die nächste Bewässerung erst dann ausgelöst wird, wenn GWtrocken unterschritten wird. Sollte es gerade vor einer Messung zu regnen beginnen, dann wird diese Messung abhängig von der Regenmenge und Zeitdauer mehr oder weniger falsch interpretiert werden, was aber bei einer nachfolgenden Messung automatisch wieder korrigiert wird.

Bei herkömmlichen Messzyklen werden Messungen in der Regel alle paar Stunden, beispielsweise alle 3-6 Stunden durchgeführt. Wird ein Messzyklus Mn, Mn+1,... jedoch sehr kurz gewählt, beispielsweise jede halbe Stunde, so kann auf Kontrollmessungen nach einer Bewässerung verzichtet werden, da diese in den regulären Messzyklus fallen. Bei kurzen Messzyklen sollte darauf geachtet werden, dass Feuchtesensoren mit niedrigem Energieverbrauch verwendet werden.

Mit Hilfe des genannten Regelalgorithmus ist man in der Lage, eine Bewässerungssteuerung herzustellen, die vom Anwender keinerlei Kenntnisse betreffend Bodenbeschaffenheit, Wassereintrag pro $m^2$ und Bewässerungsdauer verlangt. Nach dem Anbringen des Sensors im Boden wird das System gestartet, dieses kalibriert sich selbst und regelt automatisch die Bewässerungsdauer so ein, dass ein optimaler Bodenfeuchtezyklus erzielt wird.

Einzig die beiden Grenzwert GWtrocken und GWfeucht müssen vom Benutzer, abhängig von den zu bewässernden Pflanzen, eingestellt werden. Das System kann so gestaltet sein, dass aus einer vom System präsentierten Tabelle sinnvolle Werte ausgewählt werden können, die dann als Konstante übernommen werden.

Die Bestimmung der Messzyklen kann analog zu den heute erhältlichen Timern erfolgen. Meist erlauben diese die Einstellung der Startzeit und die Dauer einer Bewässerung, wobei auch die Möglichkeit besteht, durch den Einbau einer Fotodiode, den Tag-Nachzyklus zu erfassen und entsprechend den Beginn einer Bewässerung am Tag oder in der Nacht festzulegen. Ausserdem kann die Minimale Dauer zwischen zwei Bewässerungen definiert werden.

Die starre Festlegung der minimalen Dauer zwischen beispielsweise drei Bewässerungen, z.B. drei Tageszyklen, d.h. z.B. Bewässerung jede dritte Nacht, kann im Grenzfall zu Problemen führen. Und zwar dann, wenn in einer Phase hoher Temperatur, bzw. bei Pflanzenkulturen mit sehr hohem Wasserbedarf, der in der Erde gespeicherte Wasservorrat nicht ausreicht um den Bedarf für diese Zeit zu decken und daher für die Pflanzen Trockenstress auftritt.

Die hier beschriebene Regelung kann aber sehr einfach einen solchen Fall erkennen und vorzugsweise automatisch die Dauer zwischen zwei Zyklen verkürzen. Unterschreitet z.B. der Feuchtewert zum Zeitpunkt der Messung einen bestimmten kritischen Trockengrenzwert mehrmals hintereinander, obschon die Regelung die Bewässerungsdauer jeweils nach oben angepasst hat, so ist dies ein klares Zeichen dafür, dass der Bewässerungszyklus zu lange gewählt wurde. Das System kann in einem solchen Falle beispielsweise eine Meldung erstellen, oder auch automatisch die Zyklusdauer reduzieren. Eine Anzeige oder Meldung ist insbesondere dann angebracht, falls in einem System ein Bewässerungszyklus fest vorgegeben ist, beispielsweise aufgrund Wetterbedingungen (Sonne), aufgrund Nutzung (Wiese einer Badeanstalt) oder aufgrund Vorschriften (Bewässerung nur zu bestimmten Zeiten). Wird dann beispielsweise ein Feuchtegrenzwert ‚trocken' mehrfach unterschritten, ist eine Erhöhung der Bewässerungsdauer aufgrund der externen Bedingungen nicht zugelassen.

Liste der Bezugszeichen und Formeln:

**Mn, Mn+1,..** Feuchtemessung n, n+1, ..in vorbestimmten, regelmässigen Zeitabständen

**t0, t1, t2,** ... Zeitpunkte, an denen eine Aktion ausgelöst, angehalten wird (z.B. Messung, Start/Stop einer Bewässerung, etc...)

**F** Feuchtewert (eines Substrats, z.B. Erde, Rasen etc.)

**FW1,FW2** erster, zweiter gemessener Feuchtewert

**GWtrocken; GWfeucht** Einstellbare Grenzwerte 'trocken', 'feucht'

**$GW_{FK}$** Feuchtegrenzwert entsprechend der Feldkapazität

**GWnass** Fixer Grenzwert ‚nass'

Kennzahl K= (FW2-FW1)/(t1-t0) Durch Kalibriermessung bestimmte Systemkennzahl, welche benutzerspezifische Gegebenheiten berücksichtigt

Bewässerungsdauer BD=(GWfeucht-FW)/K Mit gemessenen und bestimmten Werten berechnete Bewässerungsdauer

**x,y** Korrekturfaktoren für K zur optimierten Berechnung der Bewässerungsdauer nach zu kurzer oder zu langer Bewässerungsdauer.

## Patentansprüche

1. Verfahren zum Regeln und Steuern einer Bewässerungseinrichtung, wobei die Bewässerungseinrichtung einen Sensor zur Messung der Bodenfeuchte und eine Auswerteelektronik umfasst, **dadurch gekennzeichnet, dass** durch wiederholtes Messen der Bodenfeuchte ein zeitlicher Verlauf der Bodenfeuchte vor und nach einem Bewässerungsvorgang analysiert und aus einem Feuchtewert (FW1) vor einer Bewässerung und einem Feuchtewert (FW2) nach einer Bewässerung eine Bewässerungsdauer (BD) berechnet wird.

2. Verfahren nach Anspruch 1, wobei in einer anfänglichen Kalibrierungsmessung aus den gemessenen Feuchtewerten (FW1, FW2) eine anwendungsspezifische Kennzahl K abgeleitet wird, die zur Berechnung der Bewässerungsdauer (BD) der nachfolgenden Bewässerungsvorgänge verwendet wird.

3. Verfahren nach Anspruch 2, wobei die Kennzahl K wie folgt berechnet wird

$$K = \frac{FW2 - FW1}{t1 - t0}$$

wobei t1-t0 die Bewässerungsdauer (BD) zwischen den Zeitpunkten, an denen die Messungen zur Bestimmung der beiden Feuchtewerte FW1, FW2 durchgeführt werden, darstellt.

4. Verfahren nach einem der Ansprüche 1 - 3, wobei in einem Verfahrensschritt eine Bewässerungsdauer einmalig so lange gewählt wird, dass ein Boden vollständig mit Wasser gesättigt wird und anschliessend nach einer hinreichend langen Wartezeit eine Messung durchgeführt wird, wobei der gemessene Feuchtewert einem Feldkapazitäts-Feuchtegrenzwert $GW_{FK}$ entspricht.

5. Verfahren nach Anspruch 4, wobei bei einer Eingabe eines Feuchtegrenzwertes GWfeucht, der über dem Feuchtgrenzwert $GW_{FK}$ liegt, eine Alarmmeldung generiert oder der Feuchtegrenzwert GWfeucht durch $GW_{FK}$ ersetzt wird.

6. Verfahren nach einem der Ansprüche 1-5, wobei Bewässerungen zyklisch durchgeführt werden und dabei die Kennzahl K nach einer Bewässerung überprüft wird und im Falle einer Abweichung eines Feuchtewertes (FW, FW1,FW2) von einem Feuchtegrenzwert (GW) korrigiert wird.

**7.** Verfahren nach Anspruch 6, wobei beim Erreichen eines Feuchtegrenzwertes GWfeucht, der einem Boden mit eingestellter maximaler Feuchte entspricht, die Bewässerungsdauer (BD) für die folgende Bewässerung mit einer um einen Betrag y vergrösserten Kennzahl K+y berechnet und die Bewässerungsdauer entsprechend verkürzt wird.

**8.** Verfahren nach Anspruch 6, wobei beim Nicht-Erreichen eines Feuchtegrenzwertes GWfeucht, die Bewässerungsdauer (BD) für die folgende Bewässerung mit einer um einen Betrag x verkleinerten Kennzahl K-x berechnet und die Bewässerungsdauer entsprechend erhöht wird.

**9.** Verfahren nach einem der vorhergehenden Ansprüche, wobei eine berechnete Bewässerungsdauer (BD) um einen einstellbaren aber festen Betrag D vergrössert oder verkleinert wird.

**10.** Verfahren nach einem der vorhergehenden Ansprüche, wobei bei einem mehrfachen Unterschreiten eines Feuchtegrenzwertes GWtrocken zwischen zwei Bewässerungszyklen automatisch eine Dauer zwischen zwei Bewässerungszyklen verringert wird, wobei GWtrocken dem unteren Feuchtegrenzwert eines Bodens entspricht.

**11.** Vorrichtung zum Bewässern von Pflanzen, aufweisend mindestens einen Sensor zum Messen der Bodenfeuchte und eine Auswerteelektronik, **dadurch gekennzeichnet, dass** mit dem Sensor wiederholt die Bodenfeuchte des umgebenden Bodens messbar ist und Messparameter mit Hilfe der Auswerteelektronik speicherbar sind, wobei die Vorrichtung derart mit einer Bewässerungseinrichtung abstimmbar ist, dass durch wiederholtes Messen der Bodenfeuchte ein zeitlicher Verlauf der Bodenfeuchte vor und nach einem Bewässerungsvorgang analysiert wird und aus einem Feuchtewert (FW1) vor einer Bewässerung und einem Feuchtewert (FW2) nach einer Bewässerung eine Bewässerungsdauer (BD) berechenbar ist.

**12.** Vorrichtung nach Anspruch 11, mit einem elektronisch betätigbaren Ventil zum Öffnen und Schliessen einer Wasserversorgung.

**13.** Vorrichtung nach Anspruch 11 oder 12, wobei zur Berechnung der Bewässerungsdauer (BD) eine anwendungsspezifische Kennzahl K ermittelbar ist, welche Bewässerungsdauer mit Hilfe der Auswerteelektronik durch Vergleich der gemessenen Feuchtewerte mit einem vorgegebenen Fechtegrenzwert (GW) überprüfbar und durch eine Änderung der Kennzahl K automatisch auf den Feuchtegrenzwert regelbar ist.

**14.** Elektronische Regelung für einen Feuchtesensor zur Verwendung im Verfahren nach einem der Ansprüche 1-10, **dadurch gekennzeichnet, dass** Messwerte eines Feuchtesensors gespeichert, daraus ein zeitlicher Verlauf einer Bodenfeuchte analysiert und aus Feuchtewerten (FW) zu verschiedenen Zeitpunkten eine Bewässerungsdauer (BD) berechnet wird.

**15.** Elektronische Regelung nach Anspruch 14, wobei die berechnete Bewässerungsdauer (BD) mit einem vorgegebenen Feuchtegrenzwert (FW) verglichen und bei einem Erreichen oder Überschreiten desselben die Bewässerungsdauer über Variation einer zuvor bestimmten Kennzahl K angepasst wird.

## Claims

**1.** A method for regulation and control of an irrigation device comprising a sensor for measuring soil moisture and an evaluation electronics, **characterized in that** a time profile of a soil moisture before and after an irrigation operation is analyzed by repeated measurement of the soil moisture, and an irrigation duration (BD) is calculated from a moisture value (FW1) before an irrigation and a moisture value (FW2) after an irrigation.

**2.** The method as claimed in claim 1, in which in an initial calibration measurement an application specific characteristic K is derived from the measured moisture values (FW1, FW2), which is used to calculate an irrigation time (BD) for following irrigation operations.

**3.** The method as claimed in claim 2, in which the characteristic K is calculated as follows

$$K = \frac{FW2 - FW1}{t1 - t0},$$

t1-t0 representing an irrigation duration (BD) present between the instants at which the measurements are carried out to determine the two moisture values FW1, FW2.

**4.** The method as claimed in one of claims 1-3, wherein, in a method step, an irrigation time is once selected to be so long that a soil is completely saturated with water, and after a sufficiently long waiting time, a measurement is subsequently carried out the measured moisture value corresponding to a field capacity moisture limit value $GW_{FK}$.

**5.** The method as claimed in claim 4, in which when a moisture limit value GWmoist that lies above the moisture limit value $GW_{FK}$ is inputted an alarm report is generated or the moisture limit value GWmoist is replaced by $GW_{FK}$.

**6.** The method as claimed in one of claims 1-5, in which irrigations are carried out cyclically, and in which after an irrigation the characteristic K is checked and is corrected in the case of a deviation of a moisture value (FW, FW1, FW2) from a moisture limit value (GW).

**7.** The method as claimed in claim 6, in which, when a moisture limit value GWmoist is reached which corresponds to a soil having a set maximum moisture, the irrigation time (BD) for the following irrigation is calculated with the aid of a characteristic K+y enlarged by an absolute value y, the irrigation time being reduced accordingly.

**8.** The method as claimed in claim 6, in which when a moisture limit value GWmoist is not reached, the irrigation time (BD) of the following irrigation is calculated with the aid of a characteristic K-x reduced by an absolute value x, the irrigation time being increased accordingly.

**9.** The method as claimed in one of the preceding claims, in which a calculated irrigation time (BD) is enlarged or reduced by an absolute value D which is selectable but fixed.

**10.** The method as claimed in one of the preceding claims, in which a time between two irrigation cycles is automatically decreased, when between two irrigation cycles a moisture limit value GWdry is multiply exceeded, wherein GWdry corresponds to a lower moisture limit value of a soil.

**11.** An apparatus for irrigating plants, having at least one sensor for measuring the soil moisture and evaluation electronics, **characterized in that** the sensor can be used to repeatedly measure the soil moisture of the surrounding soil and measurement parameters can be stored with the aid of the evaluation electronics, wherein the apparatus can be coordinated with an irrigation device in such a way that from repeatedly measuring the soil moisture, a time profile of the soil moisture before and after an irrigation operation is analyzed, and an irrigation time (BD) can be calculated from a moisture value (FW1) before an irrigation and a moisture value (FW2) after an irrigation.

**12.** The apparatus as claimed in claim 11 comprising an electronically actuable valve for opening and closing a water supply.

**13.** The apparatus as claimed in claim 11 or 12, in which, for calculating the irrigation time (BD), an application specific characteristic K can be determined, wherein the irrigation time can be checked with the aid of the evaluation electronics by comparing the measured moisture values to a prescribed moisture limit value (GW), and wherein the irrigation time can be automatically regulated towards the moisture limit value by changing the characteristic K.

**14.** An electronic control for a moisture sensor for use in the method as claimed in one of claims 1-10, **characterized in that** measured values of a moisture sensor are stored, a time profile of a soil moisture is analyzed therefrom, and an irrigation duration (BD) is calculated from moisture values (FW) at different instants.

**15.** The electronic control as claimed in claim 14, in which the calculated irrigation time (BD) is compared with a prescribed moisture limit value (FW), and, in the event of the latter being reached or exceeded, the irrigation time is adapted by variation of a previously determined characteristic K.

## Revendications

**1.** Procédé de régulation et de commande d'un dispositif d'arrosage, le dispositif d'arrosage comprenant un capteur destiné à mesurer l'humidité du sol et une électronique d'interprétation, **caractérisé en ce qu'**une évolution dans le temps de l'humidité du sol avant et après une opération d'arrosage est analysée par une mesure répétée de l'humidité du sol, et une durée d'arrosage (BD) est calculée à partir d'une valeur de l'humidité (FW1) avant un arrosage et une valeur de l'humidité (FW2) après un arrosage.

**2.** Procédé selon la revendication 1, un indice K spécifique à l'application étant dérivé dans une mesure d'étalonnage initiale à partir des valeurs d'humidité (FW1, FW2) mesurées, lequel est utilisé pour le calcul de la durée d'arrosage (BD) des opérations d'arrosage suivantes.

**3.** Procédé selon la revendication 2, l'indice K étant calculé comme suit

$$K = \frac{FW2 - FW1}{t1 - t0}$$

où t1 - t0 désigne la durée d'arrosage (BD) entre les instants auxquels sont effectuées les mesures destinées à déterminer les deux valeurs de l'humidité FW1, FW2.

**4.** Procédé selon l'une des revendications 1 à 3, selon lequel, dans une étape de procédé, une durée d'arrosage est choisie une seule fois longue au point qu'un sol soit entièrement saturé en eau et une mesure est ensuite effectuée après un temps d'attente suffisamment long, la valeur mesurée de l'humidité correspondant à une valeur limite d'humidité de la capacité du champ $GW_{FK}$.

**5.** Procédé selon la revendication 4, selon lequel, dans le cas d'une entrée d'une valeur limite d'humidité GWfeucht qui est supérieure à la valeur limite d'humidité $GW_{FK}$, une alarme est générée ou la valeur limite d'humidité GWfeucht est remplacée par $GW_{FK}$.

**6.** Procédé selon l'une des revendications 1 à 5, les arrosages étant réalisés de manière cyclique et l'indice K étant ici contrôlé après un arrosage et corrigé dans le cas d'un écart d'une valeur de l'humidité (FW, FW1, FW2) par rapport à une valeur limite de l'humidité (GW).

**7.** Procédé selon la revendication 6, selon lequel, lorsqu'une valeur limite d'humidité GWfeucht qui correspond à un sol qui présente l'humidité maximale réglée est atteinte, la durée d'arrosage (BD) pour l'arrosage suivant est calculée avec un indice K+y augmenté d'une valeur absolue y et la durée d'arrosage est raccourcie en conséquence.

**8.** Procédé selon la revendication 6, selon lequel, lorsqu'une valeur limite d'humidité GWfeucht n'est pas atteinte, la durée d'arrosage (BD) pour l'arrosage suivant est calculée avec un indice K-x diminué d'une valeur absolue x et la durée d'arrosage est augmentée en conséquence.

**9.** Procédé selon l'une des revendications précédentes, une durée d'arrosage (BD) calculée étant augmentée ou diminuée d'une valeur D réglable, mais fixe.

**10.** Procédé selon l'une des revendications précédentes, selon lequel, dans le cas d'un franchissement vers le bas multiple d'une valeur limite d'humidité GWtrocken entre deux cycles d'arrosage, une durée entre deux cycles d'arrosage est automatiquement réduite, GWtrocken correspondant à la valeur limite d'humidité basse d'un sol.

**11.** Dispositif servant à l'arrosage de plantes, possédant au moins un capteur destiné à mesurer l'humidité du sol et une électronique d'interprétation, **caractérisé en ce que** l'humidité du sol du sol environnant peut être mesurée de manière répétée avec le capteur et des paramètres de mesure peuvent être enregistrés à l'aide de l'électronique d'interprétation, le système pouvant être mis au point avec un dispositif d'arrosage de telle sorte qu'une évolution dans le temps de l'humidité du sol avant et après une opération d'arrosage est analysée par une mesure répétée de l'humidité du sol, et une durée d'arrosage (BD) peut être calculée à partir d'une valeur de l'humidité (FW1) avant un arrosage et une valeur de l'humidité (FW2) après un arrosage.

**12.** Dispositif selon la revendication 11, comprenant une vanne actionnée électroniquement pour ouvrir et fermer une alimentation en eau.

**13.** Dispositif selon la revendication 11 ou 12, un indice K spécifique à l'application pouvant être déterminé pour le calcul de la durée d'arrosage (BD), ladite durée d'arrosage pouvant être contrôlée à l'aide de l'électronique d'interprétation en comparant les valeurs d'humidité mesurées avec une valeur limite de l'humidité (GW) et pouvant être régulée automatiquement à la valeur limite de l'humidité par une modification de l'indice K.

**14.** Régulation électronique pour un capteur d'humidité destiné à être utilisé dans le procédé selon l'une des revendications 1 à 10, **caractérisée en ce que** des valeurs mesurées d'un capteur d'humidité sont enregistrées, une évolution dans le temps d'une humidité du sol est analysée à partir de celles-ci et une durée d'arrosage (BD) est calculée à partir des valeurs de l'humidité (FW) à différents instants.

**15.** Régulation électronique selon la revendication 14, la durée d'arrosage (BD) calculée étant comparée avec une valeur limite de l'humidité (FW) prédéfinie et, dans le cas où celle-ci est atteinte ou dépassée, la durée d'arrosage étant adaptée en faisant varier un indice K déterminé précédemment.

F
Z
$M_n$
$M_{n+1}$
$M_{n+2}$
$FW_1$
$FW_2$
$FW_2$-$FW_1$
$t_0$
$t_1$
$t_2$
$t_3$
$t_4$
$GW_{nass}$
$GW_{FK}$
$GW_{feucht}$
$GW_{trocken}$

Fig.1

F
Z
GW_nass
GW_feucht
GW_trocken
M_n+1
M_n+2
M_n+3
M_n+4
M_n+5
Delta
FWn+2
FWn+3
GWfeucht - FWn+2
GWfeucht - FWn+3

Fig.2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 7349764 B
- WO 2006081693 A